# EUROPÄISCHE PATENTSCHRIFT

(11) **EP 2 981 716 B1**
(45) Veröffentlichungstag und Bekanntmachung des Hinweises auf die Patenterteilung: **12.01.2022**
(21) Anmeldenummer: 14709193.8
(22) Anmeldetag: 07.03.2014
(51) Int. Cl.: F03D 80/50, F03D 80/00, F03D 15/00

(54) **VERFAHREN UND EINRICHTUNG ZUM EIN- UND/ODER AUSKOPPELN EINES GETRIEBE-HILFSANTRIEBS, WINDENERGIEANLAGE**
METHOD AND DEVICE FOR COUPLING AND/OR DECOUPLING A TRANSMISSION AUXILIARY DRIVE, WIND TURBINE
PROCÉDÉ ET DISPOSITIF PERMETTANT DE COUPLER ET/OU DE DÉCOUPLER UN ENTRAÎNEMENT AUXILIAIRE DE TRANSMISSION, ÉOLIENNE

(30) Priorität: 04.04.2013 DE 102013206002
(43) Veröffentlichungstag der Anmeldung: 10.02.2016
(73) Patentinhaber: Senvion GmbH, 22297 Hamburg (DE)
(72) Erfinder: SCHNETGÖKE, Hanno, 24105 Kiel (DE)
(74) Vertreter: Wallinger Ricker Schlotter Tostmann
(86) Internationale Anmeldenummer: PCT/EP2014/000587
(87) Internationale Veröffentlichungsnummer: WO 2014/161627

(56) Entgegenhaltungen:
- DE-A1- 10 334 448
- US-A- 3 960 028
- US-A1- 2010 194 114
- US-A1- 2011 123 339

## Beschreibung

Die Erfindung betrifft Verfahren zum Ein- und Auskoppeln einer an einen Rotor, einen Teil eines Triebstrangs oder eines Getriebes einer Windenergieanlage formschlüssig ein- und auskoppelbaren Rotor-Einwirkungsvorrichtung gemäß dem Oberbegriff des Anspruchs 1 bzw. 2. Die Erfindung betrifft ferner eine Einrichtung gemäß Anspruch 5 zum Ein-und/oder Auskoppeln einer an einen Rotor, einen Teil eines Triebstrangs oder eines Getriebes einer Windenergieanlage formschlüssig ein- und auskoppelbaren Rotor-Einwirkungsvorrichtung sowie eine Windenergieanlage.

Zur Wartung einer Windenergieanlage wird der Betrieb der Windenergieanlage unterbrochen und der Rotor mit seinen Rotorblättern in eine gewünschte Position gefahren. Hierzu wird üblicherweise ein Hilfsantrieb verwendet, der an einem Getriebe der Windenergieanlage eingreift. Es kann auch alternativ oder zusätzlich eine Rotorarretierung, beispielsweise mittels eines Bolzens, der durch eine Lochscheibe gesteckt wird, vorgenommen werden. Aufgrund der Größe moderner Windenergieanlagen wird ein Rotor üblicherweise durch einen Hilfsantrieb bewegt, der gegebenenfalls über ein zusätzliches Vorschaltgetriebe mit dem Getriebe der Windenergieanlage verbunden ist.

In DE 10 2008 044 900 B4 ist ein Windkraftanlagengetriebe offenbart, das zumindest eine Getriebestufe aufweist, die zumindest ein erstes und ein zweites Zahnrad umfasst. Außerdem ist ein axial mit dem ersten oder zweiten Zahnrad verbundenes und auf dieses zentriertes drittes Zahnrad vorgesehen. Diese Zahnräder sind von einem Getriebegehäuse umfasst, an das ein Hilfsantrieb angeflanscht ist, dessen Drehmoment über ein axial entlang einer von einem Motor angetriebenen Antriebswelle verschiebbares und mit der Antriebswelle drehbares viertes Zahnrad auf das dritte Zahnrad übertragbar ist. Das dritte Zahnrad steht in einem zugeschalteten Zustand des Hilfsantriebs im Eingriff mit dem vierten Zahnrad. Dabei entfällt die Notwendigkeit eines Vorschaltgetriebes.

Es ist ferner in DE 10 2008 044 900 B4 ein Hebelmechanismus offenbart, mittels dessen das vierte Zahnrad entlang der Antriebswelle des Hilfsantriebs verschoben wird. Der Hebelmechanismus umfasst einen Verstellhebel, der mittels eines einrastbaren Stellbolzens gegen unbeabsichtigte Betätigung gesichert ist, wodurch die Gefahr von Fehlbedienungen reduziert wird. Zur Rückführung des Stellbolzens in eine axiale Ruheposition weist der Stellbolzen einen Federmechanismus auf.

Zur Erfassung eines Zuschaltens des Hilfsantriebs durch Betätigung des Verstellhebels ist ferner ein elektromagnetischer Endschalter vorgesehen, der durch den Verstellhebel schaltbar ist und mit einer Windkraftanlagensteuerungseinheit verbunden ist. So wird zur Vermeidung von Schäden verhindert, dass die Windkraftanlage in Betrieb genommen wird, wenn das dritte und vierte Zahnrad für den Hilfsantrieb noch miteinander im Eingriff sind.

Weiterer Stand der Technik ist offenbart in DE 103 34 448 A1, US 2011/123339 A1 und US 2010/194114 A1.

Es ist Aufgabe der vorliegenden Erfindung, eine Rotorarretierung oder Rotorpositionierung, insbesondere bei Wartungsarbeiten einer Windenergieanlage, noch sicherer als bisher durchführen zu können.

Diese Aufgabe wird durch ein Verfahren gemäß Anspruch 1 gelöst.

Die Erfindung beruht auf dem Grundgedanken, dass, anders als in DE 2008 044 900 B4 gezeigt, nicht allein die Inbetriebnahme der Windenergieanlage von der Position der Koppelvorrichtung und der Rotor-Einwirkungsvorrichtung abhängig gemacht wird, sondern die Koppelvorrichtung selbst erst freigegeben wird, wenn der Betriebszustand der Windenergieanlage dies zulässt und die Steuerungseinrichtung der Windenergieanlage die Blockierung der Koppelvorrichtung in der Auskoppelposition deaktiviert. So wird ein unbewusstes oder bewusstes Einkoppeln der Rotor-Einwirkungsvorrichtung in einem unsicheren Betriebszustand der Windenergieanlage verhindert. Damit ist die Sicherheit des Betriebs der Windenergieanlage und des Wartungspersonals stärker geschützt als bisher. Auch kann es so nicht zu Schäden bei der Rotor-Einwirkungsvorrichtung kommen. Ein langsam trudelnder Rotor könnte beispielsweise beim Einkoppeln einer Rotor-Einwirkungsvorrichtung, wie beispielsweise eines Turn-Drives, ein stehendes Getriebe zerstören.

Die Erfindung betrifft auch ein Verfahren gemäß Anspruch 2.

Bei diesen erfindungsgemäßen Verfahren wird somit die Koppelvorrichtung in der Einkoppelposition blockiert. Da auch beim Auskoppeln, d.h. dem Verlassen der Einkoppelposition, Schäden am Rotor, Grundrahmen, Triebstrang, Getriebe, Hilfsantrieb oder der Rotor-Einwirkungsvorrichtung auftreten können, wenn diese nicht zueinander stillstehen, wird in dieser Ausführungsform des erfindungsgemäßen Verfahrens sichergestellt, dass ein ordnungsgemäßer Betriebszustand zum Auskoppeln herrscht und die Blockiervorrichtung für die Einkoppelposition erst dann deaktiviert wird, wenn solche ordnungsgemäßen Betriebsbedingungen herrschen, bei denen ein Schaden oder eine Gefährdung ausgeschlossen sind.

In einer vorteilhaften Weiterbildung ist vorgesehen, dass die Steuerungseinrichtung eine Rotordrehzahl oder eine Generatordrehzahl und/oder einen Zustand einer Rotorverzögerungseinrichtung als Betriebsparameter überwacht und die Betriebs-Blockiervorrichtung oder die Einkoppel-Blockiervorrichtung nur deaktiviert, wenn der Rotor zum Stillstand gekommen ist und/oder die Rotorverzögerungseinrichtung aktiviert ist. Die Überwachung der Rotordrehzahl bzw. Generatordrehzahl, die linear miteinander verbunden sind, und gegebenenfalls ein Zustand einer Rotorverzögerungseinrichtung, insbesondere einer Rotorbremse, als Betriebsparameter stellt sicher, dass die Steuerungseinrichtung die Betriebs-Blockiervorrichtung oder die Einkoppel-Blockiervorrichtung nur in einem sicheren Betriebszustand deaktiviert, nämlich dann, wenn der Rotor zum Stillstand gekommen ist und/oder die Rotorverzögerungseinrichtung, insbesondere Rotorbremse, aktiviert ist. Die Rotorbremse sollte fassen, bevor ein Koppelvorgang in der einen oder der anderen Richtung begonnen wird. Das tatsächliche Auskoppeln bzw. Einkoppeln, also das Ineinandergreifen entsprechender formschlüssiger Teile sollte vorzugsweise nur bei stillstehendem Rotor geschehen. Es kann jedoch auch günstig sein, ohne die Betriebssicherheit zu gefährden, wenn nur eine der beiden Bedingungen erfüllt ist, etwa bei aktivierter Rotorbremse und sehr geringer Rotordrehzahl.

Vorzugsweise wird die Rotorverzögerungseinrichtung nach der Aktivierung der Einkoppel-Blockiervorrichtung oder nach der Aktivierung der Betriebs-Blockiervorrichtung deaktiviert. Dies bedeutet, dass nach Beendigung des Einkoppelvorgangs bzw. des Auskoppelvorgangs die Rotorverzögerungseinrichtung, insbesondere Rotorbremse, gelöst werden kann, so dass nach dem Einkoppeln beispielsweise ein Getriebe-Hilfsantrieb den Rotor drehen kann bzw. nach dem Auskoppeln die Windenergieanlage ihren normalen Betrieb wieder aufnehmen kann.

Die der Erfindung zugrunde liegende Aufgabe wird auch durch eine Einrichtung gemäß Anspruch 5 gelöst. Die Vorrichtungsmerkmale der erfindungsgemäßen Einrichtung entsprechen im Wesentlichen den Verfahrensmerkmalen des bzw. der erfindungsgemäßen Verfahren.

Es ist vorgesehen, dass ein Betriebs-Positionssensor und/oder ein Einkoppel-Positionssensor umfasst ist oder sind, die ein Signal geben, wenn die Koppelvorrichtung die Auskoppelposition oder die Einkoppelposition erreichen und/oder einnehmen. Damit kann die Einrichtung an die Steuerungseinrichtung Rückmeldung geben, ob die Koppelvorrichtung eine Auskoppelposition oder Einkoppelposition eingenommen hat, so dass die Steuerungseinrichtung hierauf reagieren kann. So kann die Steuerungseinrichtung z.B. nach dem erfolgten Auskoppeln und Erreichen der Auskoppelposition den Normalbetrieb der Anlage wieder aufnehmen oder nach Erreichen der Einkoppelposition, also erfolgtem Einkoppeln, den Getriebe-Hilfsantrieb steuern, um den Rotor zu drehen.

In diesem Fall ist in einer vorteilhaften Weiterbildung vorgesehen, dass die Betriebs-Blockiervorrichtung den Betriebs-Positionssensor umfasst oder der Betriebs-Positionssensor ist und/oder dass die Einkoppel-Blockiervorrichtung den Einkoppel-Positionssensor umfasst oder der Einkoppel-Positionssensor ist, insbesondere als Sicherheitsschalter ausgebildet ist oder sind. Eine einheitliche Ausführungsform bzw. Bauform von Positionssensor und Blockiervorrichtung erspart Aufwand und ist beispielsweise in Form von Sicherheitsschaltern realisiert. Sicherheitsschalter können so ausgebildet sein, dass sie ein bewegliches und positionsempfindliches Rastelement aufweisen, das bei Annäherung eines Teils der Koppelvorrichtung aus einer Ruheposition herausbewegt wird und auf diese Weise als Positionssensor, beispielsweise als Endschalter, dient, wobei das Rastelement außerdem ausgebildet ist, mit einem entsprechenden Teil der Koppelvorrichtung einzurasten, entweder in gesteuerter Weise oder automatisch, beispielsweise durch Federeinwirkung, und anschließend die Koppelvorrichtung daran zu hindern, sich aus der eingenommenen Position herauszubewegen.

Damit ist die Funktion der Blockiervorrichtung realisiert. Auf ein Signal der Steuerungseinrichtung hin kann dann diese Blockade wieder aufgehoben werden bzw. die Blockiervorrichtung deaktiviert werden, so dass das Rastelement das einrastende Teil der Koppelvorrichtung freigibt.

Anstatt eines Rastmechanismus kann auch eine elektromagnetische oder magnetische Fixierung gewählt werden, die ebenfalls steuerbar ist.

Die Steuerungseinrichtung ist ausgebildet und eingerichtet, die Betriebs-Blockiervorrichtung und/oder die Einkoppel-Blockiervorrichtung in Abhängigkeit des wenigstens einen Signals des Betriebs-Positionssensors bzw. Einkoppel-Positionssensors zu aktivieren. Dies bedeutet, dass die eine oder die beiden Blockiervorrichtungen von der Steuerungseinrichtung nicht nur deaktiviert werden können, sondern auch aktiviert werden.

Zusätzlich ist vorteilhafterweise vorgesehen, dass die Betriebs-Blockiervorrichtung und/oder die Einkoppel-Blockiervorrichtung mit einer selbsttätigen Aktivierung ausgestattet ist oder sind, insbesondere einem Einrastmechanismus oder einem Magneten oder Elektromagneten. In diesem Fall können die Blockiervorrichtungen durch die Steuerungseinrichtung deaktiviert werden, müssen aber nicht aktiviert werden. Dies verringert den baulichen Aufwand.

In einer vorteilhaften Ausführungsform ist der Einrastmechanismus als Federmechanismus ausgeführt. Dies stellt eine besonders einfache und kostengünstige Ausführungsform dar.

Vorzugsweise ist eine Rotorverzögerungseinrichtung, insbesondere eine Rotorbremse, umfasst, die mittels der Steuerungseinrichtung schaltbar ist. Damit ist sichergestellt, dass beispielsweise während eines Koppelvorgangs für die Rotor-Einwirkungsvorrichtung die Rotorverzögerungseinrichtung aktiviert ist und somit ein sicherer Betriebszustand eingehalten wird.

Die Rotor-Einwirkungsvorrichtung ist vorzugsweise als Getriebe-Hilfsantrieb oder als formschlüssige Rotorarretierung, insbesondere Bolzen, ausgebildet. Ein solcher Bolzen kann durch eine entsprechende Lochscheibe am Rotor oder Triebstrang oder Getriebe gesteckt werden, um ein weiteres Drehen des Rotors zu verhindern.

In einer besonders einfachen und bevorzugten Ausführungsform ist die Betriebs-Blockiervorrichtung auch als Einkoppel-Blockiervorrichtung ausgebildet. Damit sind beide Blockiervorrichtungen in einer Vorrichtung zusammengefasst. So kann beispielsweise die Blockiervorrichtung zwei verschiedene Blockierpositionen definieren, die durch eine Vorrichtung realisiert sind.

Schließlich wird die der Erfindung zugrunde liegende Aufgabe auch durch eine Windenergieanlage mit einem Turm und einem auf dem Turm angeordneten Rotor mit wenigstens einem Rotorblatt, umfassend eine zuvor beschriebene erfindungsgemäße Einrichtung zum Ein- und/oder Auskoppeln einer an einen Rotor, einen Teil eines Triebstrangs oder eines Getriebes der Windenergieanlage formschlüssig ein- und auskoppelbaren Rotor-Einwirkungsvorrichtung gelöst.

Die Erfindung wird nachstehend ohne Beschränkung des allgemeinen Erfindungsgedankens anhand von Ausführungsbeispielen unter Bezugnahme auf die Zeichnungen beschrieben.

Es zeigen:
- Fig. 1: eine schematische Darstellung einer Windenergieanlage;
- Fig. 2: eine schematische Darstellung einer erfindungsgemäßen Koppelvorrichtung und
- Fig. 3: eine schematische Übersicht über eine erfindungsgemäße Einrichtung.

In den Zeichnungen sind jeweils gleiche oder gleichartige Elemente und/oder Teile mit denselben Bezugsziffern versehen, so dass von einer erneuten Vorstellung jeweils abgesehen wird.

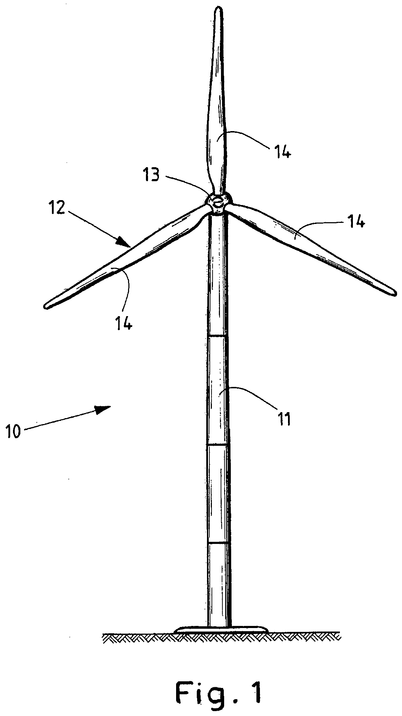

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 13 angebracht sind. Bei Windeinfall dreht sich der Rotor 12 in an sich bekannter Weise. Hierdurch kann Leistung von einem an den Rotor 12 bzw. an die Rotornabe 13 angeschlossenen Generator in einem auf dem Turm 11 und hinter dem Rotor 12 angeordneten Maschinenhaus erzeugt werden und in ein Verbrauchernetz abgegeben werden.

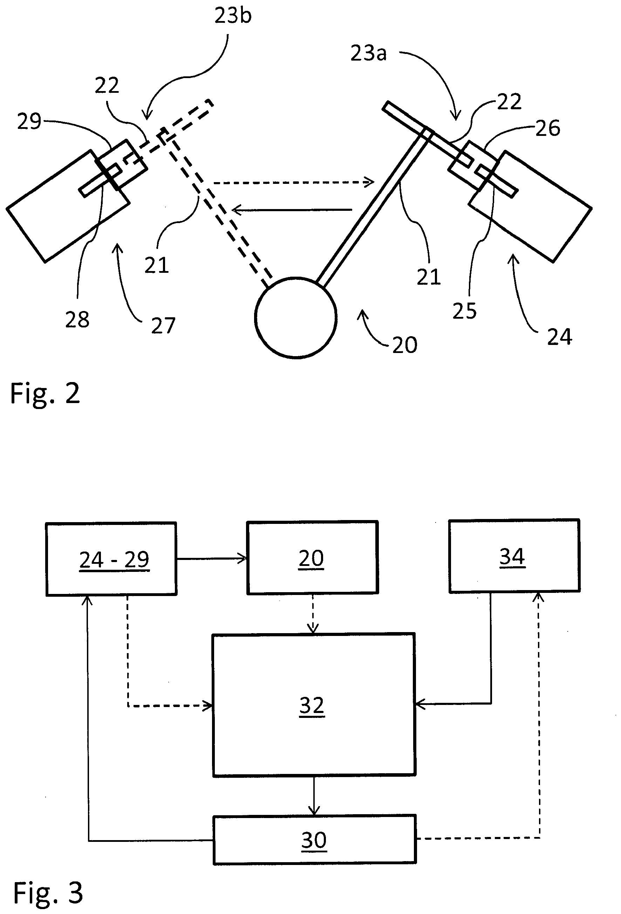

In Fig. 2 ist eine erfindungsgemäße Koppelvorrichtung 20 schematisch dargestellt. Diese weist in dem gezeigten Ausführungsbeispiel einen schwenkbaren Teil mit einem Verstellhebel 21 auf, an dessen Spitze eine Lasche 22 in einer T-förmigen Konfiguration angeordnet ist. Mit durchgezogenen Strichen sind der Verstellhebel 21 und die Lasche 22 in der Auskoppelposition 23a dargestellt, in gestrichelter Darstellungsweise sind der Verstellhebel 21 und die Lasche 22 in der Einkoppelposition 23b dargestellt. Zwischen diesen Positionen bezeichnet der mit einem durchgezogenen Strich gezeichnete Pfeil die Bewegungsrichtung beim Einkoppeln der Koppelvorrichtung 20 und der gestrichelte Pfeil die Bewegungsrichtung des Auskoppelns. Mit der Koppelvorrichtung 20 ist ein Getriebe-Hilfsantrieb oder ein Bauteil, beispielsweise ein Zahnrad, eines Getriebe-Hilfsantriebs oder eine anderweitige Rotor-Einwirkungsvorrichtung gekoppelt, die mittels der Koppelvorrichtung 20 mitbewegt und ein- oder ausgekoppelt wird.

An den Endpositionen der Auskoppelposition 23a und der Einkoppelposition 23b sind in dem Ausführungsbeispiel eine Betriebs-Blockiervorrichtung 24 bzw. eine Einkoppel-Blockiervorrichtung 27 angeordnet. Mittels der Blockiervorrichtungen 24, 27 kann die Lasche 22 der Koppelvorrichtung 20 arretiert werden und ein weiteres Verschieben oder Zurückholen des Verstellhebels 21 somit blockiert werden. Dazu weist die Betriebs-Blockiervorrichtung einen Betriebs-Positionssensor 25 und die Einkoppel-Blockiervorrichtung noch einen Einkoppel-Positionssensor 28 auf, die, wenn sie von der Lasche 22 berührt werden, ein Signal aussenden, dass die Koppelvorrichtung 20 die Auskoppelposition 23a bzw. die Einkoppelposition 23b erreicht hat. Die Betriebs-Blockiervorrichtung 24 umfasst außerdem eine Blockiereinheit 26, mit der die Lasche 22 arretiert und blockiert wird. Hierzu weist die Einkoppel-Blockiervorrichtung eine Blockiereinheit 29 auf. Die Blockiereinheiten 26, 29 können entweder Nuten, Haken, andere mechanische Mittel oder Elektromagneten sein, die schaltbar sind. Die Blockiereinheiten 26 können auch gleichzeitig Positionssensoren 25, 28 sein, wie dies bei Sicherheitsschaltern in einigen Fällen realisiert ist.

In Fig. 3 ist eine erfindungsgemäße Einrichtung in einer schematischen Übersicht dargestellt. Die erfindungsgemäße Koppelvorrichtung 20, die unter anderem auch die Betriebs-Blockiervorrichtung 24 mit Betriebs-Positionssensor 25 und Blockiereinheit 26 sowie gegebenenfalls die Einkoppel-Blockiervorrichtung 27 mit Einkoppel-Positionssensor 28 und Blockiereinheit 29 gemäß Fig. 2 umfassen kann, ist dabei ebenso Teil der Einrichtung wie eine Steuerungseinrichtung 30, eine Sensorik 32 und eine Rotorverzögerungseinrichtung 34, beispielsweise eine Rotorbremse. Mit durchgezogenen Pfeilen ist dargestellt, welche Elemente auf welche anderen wirken, während gestrichelte Pfeile zeigen, welche Elemente auf welche anderen Elemente wirken können.

Im Fall eines Einkoppelns kann die Steuerungseinrichtung 30 ein Signal zur Rotorbremsung an die Verzögerungseinrichtung 34 geben oder die Verzögerungseinrichtung 34 kann manuell betätigt werden. Daraufhin gibt die Sensorik der Verzögerungseinrichtung 34 ein Aktivierungssignal an die Steuerungseinrichtung 30. Das Signal der Sensorik der Verzögerungseinrichtung 34 ist in Fig. 3 unter dem Oberbegriff Sensorik 32 mit enthalten. Gegebenenfalls werden weitere, ohnehin vorhandene Sensoren, zum Beispiel ein Drehzahlsignal, ein Signal, das eine Rotordrehzahl von Null anzeigt usw. überwacht. Ein weiteres Signal innerhalb der Sensorik 32 kann ein Koppelpositionssignal sein. Dieses Koppelpositionssignal kann von den Positionssensoren 25, 28 erzeugt werden. Ferner kann in einer bevorzugten Ausführungsform ein Signal generiert werden, sobald der Turndrive-Antriebsmotor stromlos ist.

Im nächsten Schritt wird die Betriebs-Blockiereinrichtung 24 bzw. deren Blockiervorrichtung 26 deaktiviert und die Koppeleinrichtung auf diese Weise durch die Steuerungseinrichtung 30 freigegeben, so dass die Rotoreinwirkungsvorrichtung mit Hilfe der Koppelvorrichtung 20 eingekoppelt werden kann. Die Blockiervorrichtung 24 und die Koppelvorrichtung 20 können außerdem über ihre derzeitigen Zustände jeweils Signale an die Sensorik 32 und damit an die Steuerungseinrichtung 30 senden. So erfährt die Steuerungseinrichtung 30, wann die Koppelvorrichtung 20 die Einkoppelposition 23b erreicht hat, durch ein Signal des entsprechenden Einkoppel-Positionssensors 28. Sobald gemeldet ist, dass die Blockierung durch die Einkoppel-Blockiervorrichtung 27 und die Blockiereinheit 29 vollzogen worden ist, kann die Rotorverzögerungseinrichtung 34 gelöst werden und mit der Wartung und dem Verstellen des Rotors 12 begonnen werden.

Im umgekehrten Fall wird zunächst wiederum die Rotorverzögerungseinrichtung 34 aktiviert, um den Rotor 12 stillzusetzen. Das Deaktivieren der Einkoppel-Blockiervorrichtung 27 setzt voraus, dass das Signal, dass die Rotoreinwirkungsvorrichtung 34 gefasst hat, ansteht. Bevorzugt wird zusätzlich ein Signal abgefragt, das anzeigt, dass sich der Rotor 12 nicht mehr dreht. Ebenfalls bevorzugt wird zusätzlich abgefragt, dass die Rotor-Einwirkungsvorrichtung 34, beispielsweise ein Turn-Drive, stromlos geschaltet ist. Damit wird sichergestellt, dass die Rotor-Einwirkungsvorrichtung 34 nicht versehentlich einen durch einen aktivierten Turn-Drive ausgelösten Drehvorgang "abgewürgt" hat. Insbesondere ist vorteilhafterweise vorgesehen, dass die abgefragten Betriebsparameter zur Deaktivierung der Betriebs-Blockiervorrichtung 24 und der Einkoppel-Blockiervorrichtung 27 nicht identisch sind.

Mit der Deaktivierung der Einkoppel-Blockiervorrichtung 27 wird die in Fig. 2 dargestellte Lasche 22 des Verstellhebels 21 losgelassen, so dass nunmehr ein Auskoppeln der Rotor-Einwirkungsvorrichtung möglich wird. Der Verstellhebel 21 wird dann bis zur Auskoppelposition 23a bewegt, wo die Lasche 22 am Betriebs-Positionssensor 25 anschlägt und über die Sensorik 32 die Steuerungseinrichtung 30 das Signal erhält, dass die Rotor-Einwirkungsvorrichtung vollständig ausgekoppelt ist. An dieser Stelle ist entweder die Lasche 22 bereits automatisch durch die Blockiereinheit 26 blockiert oder die Steuerungseinrichtung 30 gibt ein Signal an die Betriebs-Blockiervorrichtung 24 aus, die Koppelvorrichtung 20 in der Auskoppelposition 23a zu blockieren. Sobald dies geschehen ist, und der Steuerungseinrichtung 30 zurückgemeldet worden ist, dass die Koppelvorrichtung 20 in der Auskoppelposition 23a blockiert ist, deaktiviert die Steuerungseinrichtung 30 die Rotorverzögerungseinrichtung 34 und der normale Betrieb der Windenergieanlage kann wieder aufgenommen werden.

### Bezuqszeichenliste

- 10: Windenergieanlage
- 11: Turm
- 12: Rotor
- 13: Rotornabe
- 14: Rotorblätter
- 20: Koppelvorrichtung
- 21: Verstellhebel
- 22: Lasche
- 23a: Auskoppelposition
- 23b: Einkoppelposition
- 24: Betriebs-Blockiervorrichtung
- 25: Betriebs-Positionssensor
- 26: Blockiereinheit
- 27: Einkoppel-Blockiervorrichtung
- 28: Einkoppel-Positionssensor
- 29: Blockiereinheit
- 30: Steuerungseinrichtung
- 32: Sensorik
- 34: Rotorverzögerungseinrichtung

## Patentansprüche

1. Verfahren zum Einkoppeln einer an einen Rotor,
einen Teil eines Triebstrangs oder eines Getriebes einer Windenergieanlage (10) formschlüssig ein- und auskoppelbaren Rotor-Einwirkungsvorrichtung mittels einer mit der Rotor-Einwirkungsvorrichtung verbundenen Koppelvorrichtung (20), die zwischen einer Auskoppelposition (23a) und einer Einkoppelposition (23b) der Rotor-Einwirkungsvorrichtung reversibel schaltbar ist, wobei, wenn die Koppelvorrichtung (20) in der Auskoppelposition (23a) positioniert ist, die Koppelvorrichtung (20) mittels einer Betriebs-Blockiervorrichtung (24) in der Auskoppelposition (23a) blockiert ist, wobei
eine Steuerungseinrichtung (30) der Windenergieanlage (10) wenigstens einen Betriebsparameter der Windenergieanlage (10) überwacht und in Abhängigkeit des wenigstens einen überwachten Betriebsparameters die Betriebs-Blockiervorrichtung (24) deaktiviert, wobei nach der Deaktivierung der Betriebs-Blockiervorrichtung (24) die Rotor-Einwirkungsvorrichtung mittels der Koppelvorrichtung (20) in die Einkoppelposition (23b) gebracht und eingekoppelt wird, wobei ein Einkoppel-Positionssensor (28) ein Signal gibt, wenn die Koppelvorrichtung (20) die Einkoppelposition (23b) erreicht und/oder einnimmt, und die Steuerungseinrichtung (30) eine Einkoppel-Blockiervorrichtung (27) in Abhängigkeit des Signals des Einkoppel-Positionssensors (28) aktiviert.

2. Verfahren zum Auskoppeln einer an einen Rotor (12), einen Teil eines Triebstrangs oder eines Getriebes einer Windenergieanlage (10) formschlüssig ein- und auskoppelbaren Rotor-Einwirkungsvorrichtung mittels einer mit der Rotor-Einwirkungsvorrichtung verbundenen Koppelvorrichtung (20), die zwischen einer Auskoppelposition (23a) und einer Einkoppelposition (23b) der Rotor-Einwirkungsvorrichtung reversibel schaltbar ist, insbesondere nach Anspruch 1, wobei,
wenn die Koppelvorrichtung (20) in der Einkoppelposition (23b) positioniert ist, die Koppelvorrichtung (20) mittels einer Einkoppel-Blockiervorrichtung (27) in der Einkoppelposition (23b) blockiert ist, wobei eine Steuerungseinrichtung (30) der Windenergieanlage (10) wenigstens einen Betriebsparameter der Windenergieanlage (10) überwacht und in Abhängigkeit von dem wenigstens einen überwachten Betriebsparameter die Einkoppel-Blockiervorrichtung (27) deaktiviert, wobei nach der Deaktivierung der Einkoppel- Blockiervorrichtung (27) die Rotor-Einwirkungsvorrichtung mittels der Koppelvorrichtung (20) ausgekoppelt und in die Auskoppelposition (23a) gebracht wird, wobei ein Betriebs-Positionssensor (25) ein Signal gibt, wenn die Koppelvorrichtung (20) die Auskoppelposition (23a) erreicht und/oder einnimmt, und
die Steuerungseinrichtung (30) eine Betriebs-Blockiervorrichtung (24) in Abhängigkeit des Signals des Betriebs-Positionssensors (25) aktiviert.

3. Verfahren nach einem der Ansprüche 1 bis 2, **dadurch gekennzeichnet, dass** die Steuerungseinrichtung (30) eine Rotordrehzahl oder eine Generatordrehzahl und/oder einen Zustand einer Rotorverzögerungseinrichtung (34) als Betriebsparameter überwacht und die Betriebs-Blockiervorrichtung (24) oder die Einkoppel-Blockiervorrichtung (27) nur deaktiviert, wenn der Rotor (12) zum Stillstand gekommen ist und/oder die Rotorverzögerungseinrichtung (34) aktiviert ist.

4. Verfahren nach Anspruch 3, **dadurch gekennzeichnet, dass** die Rotorverzögerungseinrichtung (34) nach der Aktivierung der Einkoppel-Blockiervorrichtung (27) oder nach der Aktivierung der Betriebs-Blockiervorrichtung (24) deaktiviert wird.

5. Einrichtung zum Ein- und/oder Auskoppeln einer an einen Rotor (12), einen Teil eines Triebstrangs oder eines Getriebes einer Windenergieanlage (10) formschlüssig ein- und auskoppelbaren Rotor-Einwirkungsvorrichtung, umfassend eine mit der Rotor-Einwirkungsvorrichtung verbundene Koppelvorrichtung (20), die zwischen einer Auskoppelposition (23a) und einer Einkoppelposition (23b) der Rotor-Einwirkungsvorrichtung reversibel schaltbar ist, und eine Steuerungseinrichtung (30), mittels der wenigstens ein Betriebsparameter der Windenergieanlage (10) überwachbar ist, mit
- einer Betriebs-Blockiervorrichtung (24), mittels der die Koppelvorrichtung (20) in der Auskoppelposition (23a) blockierbar ist, wobei mittels der Steuerungseinrichtung (30) die Betriebs-Blockiervorrichtung (24) deaktivierbar ist, wobei die Steuerungseinrichtung (30) ausgebildet und eingerichtet ist, die Betriebs-Blockiervorrichtung (24) in Abhängigkeit des wenigstens einen überwachten Betriebsparameters zu deaktivieren, wobei ein Einkoppel-Positionssensor (28) umfasst ist, der ein Signal gibt, wenn die Koppelvorrichtung (20) die Einkoppelposition (23b) erreicht und/oder einnimmt, wobei die Steuerungseinrichtung (30) ausgebildet und eingerichtet ist, eine Einkoppel-Blockiervorrichtung (27) in Abhängigkeit des Signals des Einkoppel-Positionssensors (28) zu aktivieren, und/oder
- einer Einkoppel-Blockiervorrichtung (27), mittels der die Koppelvorrichtung (20) in der Einkoppelposition (23b) blockierbar ist, wobei mittels der Steuerungseinrichtung (30) die Einkoppel-Blockiervorrichtung (27) deaktivierbar ist,
wobei die Steuerungseinrichtung (30) ausgebildet und eingerichtet ist, die Einkoppel-Blockiervorrichtung (27) in Abhängigkeit des wenigstens einen überwachten Betriebsparameters zu deaktivieren, wobei ein Betriebs-Positionssensor (25) umfasst ist, der ein Signal gibt, wenn die Koppelvorrichtung die Auskoppelposition (23a) erreicht und/oder einnimmt, wobei die Steuerungseinrichtung ausgebildet und eingerichtet ist, eine Betriebs-Blockiervorrichtung (24) in Abhängigkeit des Signals des Betriebs-Positionssensors (25) zu aktivieren.

6. Einrichtung nach Anspruch 5, **dadurch gekennzeichnet, dass** die Betriebs-Blockiervorrichtung (24) den Betriebs-Positionssensor (25) umfasst oder der Betriebs-Positionssensor (25) ist und/oder dass die Einkoppel-Blockiervorrichtung (27) den Einkoppel-Positionssensor (28) umfasst oder der Einkoppel-Positionssensor (28) ist, insbesondere als Sicherheitsschalter ausgebildet ist oder sind.

7. Einrichtung nach einem der Ansprüche 5 bis 6, **dadurch gekennzeichnet, dass** die Betriebs-Blockiervorrichtung (24) und/oder die Einkoppel-Blockiervorrichtung (27) mit einer selbsttätigen Aktivierung ausgestattet ist oder sind, insbesondere einem Einrastmechanismus oder einem Magneten oder Elektromagneten.

8. Einrichtung nach einem der Ansprüche 5 bis 7, **dadurch gekennzeichnet, dass** eine Rotorverzögerungseinrichtung (34), insbesondere eine Rotorbremse, umfasst ist, die mittels der Steuerungseinrichtung (30) schaltbar ist.

9. Einrichtung nach einem der Ansprüche 5 bis 8, **dadurch gekennzeichnet, dass** die Rotor-Einwirkungsvorrichtung als Getriebe-Hilfsantrieb oder als formschlüssige Rotorarretierung, insbesondere Bolzen, ausgebildet ist.

10. Einrichtung nach einem der Ansprüche 5 bis 9, **dadurch gekennzeichnet, dass** die Betriebs-Blockiervorrichtung (24) auch als Einkoppel-Blockiervorrichtung (27) ausgebildet ist.

11. Windenergieanlage (10) mit einem Turm (11) und einem auf dem Turm (11) angeordneten Rotor (12) mit wenigstens einem Rotorblatt (14), umfassend eine Einrichtung nach einem der Ansprüche 5 bis 10 zum Ein- und/oder Auskoppeln einer an einen Rotor (12), einen Teil eines Triebstrangs oder eines Getriebes der Windenergieanlage (10) formschlüssig ein- und auskoppelbaren Rotor-Einwirkungsvorrichtung.

## Claims

1. A method of coupling a rotor influencing device, which can be coupled, in a form-fitting manner, to a rotor, a part of a drive train or a transmission of a wind energy installation (10), and which can be decoupled from the rotor, from a part of a drive train or from a transmission of a wind energy installation (10), by means of a coupling device (20) which is connected to the rotor influencing device, which coupling device (20) can be switched between a decoupling position (23a) and a coupling position (23b) of the rotor influencing device in a reversible manner, wherein, when the coupling device (20) is positioned in the decoupling position (23a), the coupling device (20) is blocked in the decoupling position (23a) by means of an operating blocking device (24), wherein a control device (30) of the wind energy installation (10) monitors at least one operating parameter of the wind energy installation (10) and deactivates the operating blocking device (24) as a function of the at least one monitored operating parameter, wherein, after the deactivation of the operating blocking device (24), the rotor influencing device is brought into the coupling position (23b) and is coupled by means of the coupling device (20), wherein a coupling position sensor (28) gives a signal when the coupling device (20) has reached and / or has assumed the coupling position (23b) and the control device (30) activates a coupling blocking device (27) as a function of the signal of the coupling position sensor (28).

2. A method of decoupling a rotor influencing device, which can be coupled, in a form-fitting manner, to a rotor (12), a part of a drive train or a transmission of a wind energy installation (10), and which can be decoupled from the rotor (12), from a part of a drive train or from a transmission of a wind energy installation (10), by means of a coupling device (20) which is connected to the rotor influencing device, which coupling device (20) can be switched between a decoupling position (23a) and a coupling position (23b) of the rotor influencing device in a reversible manner, in particular in accordance with claim 1, wherein, when the coupling device (20) is positioned in the coupling position (23b), the coupling device (20) is blocked in the coupling position (23b) by means of a coupling blocking device (27), wherein a control device (30) of the wind energy installation (10) monitors at least one operating parameter of the wind energy installation (10) and deactivates the coupling blocking device (27) as a function of the at least one monitored operating parameter, wherein, after the deactivation of the coupling blocking device (27), the rotor influencing device is decoupled and brought into the decoupling position (23a) by means of the coupling device (20), wherein an operating position sensor (25) gives a signal when the coupling device (20) has reached and / or has assumed the decoupling position (23a) and the control device (30) activates an operating blocking device (24) as a function of the signal of the operating position sensor (25).

3. The method in accordance with any one of the claims 1 to 2, **characterised in that** the control device (30) monitors a rotational speed of the rotor or a rotational speed of a generator and / or a state of a rotor deceleration device (34) as operating parameter and deactivates the operating blocking device (24) or the coupling blocking device (27) only when the rotor (12) has come to a standstill and / or the rotor deceleration device (34) is activated.

4. The method in accordance with claim 3, **characterised in that** the rotor deceleration device (34) is deactivated after the activation of the coupling blocking device (27) or after the activation of the operating blocking device (24).

5. A device for coupling and / or decoupling a rotor influencing device, which can be coupled, in a form-fitting manner, to a rotor (12), a part of a drive train or a transmission of a wind energy installation (10), and which can be decoupled from the rotor (12), from a part of a drive train or from a transmission of a wind energy installation (10), wherein the device comprises a coupling device (20) which is connected to the rotor influencing device, which coupling device (20) can be switched between a decoupling position (23a) and a coupling position (23b) of the rotor influencing device in a reversible manner, and a control device (30), by means of which at least one operating parameter of the wind energy installation (10) can be monitored, the device comprising
- an operating blocking device (24), by means of which the coupling device (20) can be blocked in the decoupling position (23a), wherein the operating blocking device (24) can be deactivated by means of the control device (30), wherein the control device (30) is constructed and set up to deactivate the operating blocking device (24) as a function of the at least one monitored operating parameter, wherein a coupling position sensor (28) is comprised which gives a signal when the coupling device (20) has reached and / or has assumed the coupling position (23b), wherein the control device (30) is constructed and set up to activate a coupling blocking device (27) as a function of the signal from the coupling position sensor (28), and / or
- a coupling blocking device (27), by means of which the coupling device (20) can be blocked in the coupling position (23b), wherein the coupling blocking device (27) can be deactivated by means of the control device (30),
wherein the control device (30) is constructed and set up to deactivate the coupling blocking device (27) as a function of the at least one monitored operating parameter, wherein an operating position sensor (25) is comprised which gives a signal when the coupling device has reached and / or has assumed the decoupling position (23a), wherein the control device is constructed and set up to activate an operating blocking device (24) as a function of the signal from the operating position sensor (25).

6. The device in accordance with claim 5, **characterised in that** the operating blocking device (24) comprises the operating position sensor (25) or that the operating blocking device (24) is the operating position sensor (25) and / or **in that** the coupling blocking device (27) comprises the coupling position sensor (28) or that the coupling blocking device (27) is the coupling position sensor (28), in particular **in that** the operating blocking device (24) and / or the coupling blocking device (27) is or are constructed in the form of a safety switch.

7. The device in accordance with any one of the claims 5 to 6, **characterised in that** the operating blocking device (24) and / or the coupling blocking device (27) is or are equipped with an automatic activation, in particular with a latching mechanism or a magnet or an electromagnet.

8. The device in accordance with any one of the claims 5 to 7, **characterised in that** a rotor deceleration device (34), in particular a rotor brake, is comprised, which can be switched by means of the control device (30).

9. The device in accordance with any one of the claims 5 to 8, **characterised in that** the rotor influencing device is constructed in the form of a transmission auxiliary drive or in the form of a positive fit rotor locking device, in particular a bolt.

10. The device in accordance with any one of the claims 5 to 9, **characterised in that** the operating blocking device (24) is also constructed in the form of a coupling blocking device (27).

11. A wind energy installation (10) which comprises a tower (11) and a rotor (12) which is arranged on the tower (11) and which rotor has at least one rotor blade (14), comprising a device in accordance with any one of the claims 5 to 10 for coupling a rotor influencing device, which can be coupled, in a form-fitting manner, to a rotor (12), a part of a drive train or a transmission of the wind energy installation (10), and / or for decoupling the rotor influencing device from the rotor (12), from a part of a drive train or from a transmission of the wind energy installation (10).

## Revendications

1. Procédé permettant de coupler un dispositif d'influence de rotor pouvant être couplé et découplé à complémentarité de formes au niveau d'un rotor, d'une partie d'une chaîne cinématique ou d'une transmission d'une éolienne (10) au moyen d'un dispositif de couplage (20) relié au dispositif d'influence de rotor, qui peut être commuté de manière réversible entre une position de découplage (23a) et une position de couplage (23b) du dispositif d'influence de rotor, dans lequel, lorsque le dispositif de couplage (20) est positionné dans la position de découplage (23a), le dispositif de couplage (20) est bloqué au moyen d'un dispositif de blocage de fonctionnement (24) dans la position de découplage (23a), dans lequel un dispositif de commande (30) de l'éolienne (10) surveille au moins un paramètre de fonctionnement de l'éolienne (10) et désactive en fonction d'au moins un paramètre de fonctionnement surveillé le dispositif de blocage de fonctionnement (24), dans lequel après la désactivation du dispositif de blocage de fonctionnement (24) le dispositif d'influence de rotor est amené et est couplé au moyen du dispositif de couplage (20) dans la position de couplage (23b), dans lequel un capteur de position de couplage (28) donne un signal lorsque le dispositif de couplage (20) atteint et/ou occupe la position de couplage (23b), et le dispositif de commande (30) active un dispositif de blocage de couplage (27) en fonction du signal du capteur de position de couplage (28).

2. Procédé permettant de découpler un dispositif d'influence de rotor pouvant être couplé et découplé à complémentarité de formes au niveau d'un rotor (12), d'une partie d'une chaîne cinématique ou d'une transmission d'une éolienne (10) au moyen d'un dispositif de couplage (20) relié au dispositif d'influence de rotor, qui peut être commuté de manière réversible entre une position de découplage (23a) et une position de couplage (23b) du dispositif d'influence de rotor, en particulier selon la revendication 1, dans lequel, lorsque le dispositif de couplage (20) est positionné dans la position de découplage (23b), le dispositif de couplage (20) est bloqué au moyen d'un dispositif de blocage de couplage (27) dans la position de couplage (23b), dans lequel un dispositif de commande (30) de l'éolienne (10) surveille au moins un paramètre de fonctionnement de l'éolienne (10) et désactive en fonction de l'au moins un paramètre de fonctionnement surveillé le dispositif de blocage de couplage (27), dans lequel après la désactivation du dispositif de blocage de couplage (27) le dispositif d'influence de rotor est découplé au moyen du dispositif de couplage (20) et est amené dans la position de découplage (23a), dans lequel un capteur de position de fonctionnement (25) donne un signal lorsque le dispositif de couplage (20) atteint et/ou occupe la position de découplage (23a), et le dispositif de commande (30) active un dispositif de blocage de fonctionnement (24) en fonction du signal du capteur de position de fonctionnement (25).

3. Procédé selon l'une quelconque des revendications 1 à 2, **caractérisé en ce que** le dispositif de commande (30) surveille une vitesse de rotation de rotor ou une vitesse de rotation de générateur et/ou un état d'un dispositif de ralentissement de rotor (34) comme paramètre de fonctionnement et désactive le dispositif de blocage de fonctionnement (24) ou le dispositif de blocage de couplage (27) seulement lorsque le rotor (12) est parvenu à l'arrêt et/ou le dispositif de ralentissement de rotor (34) est activé.

4. Procédé selon la revendication 3, **caractérisé en ce que** le dispositif de ralentissement de rotor (34) est désactivé après l'activation du dispositif de blocage de couplage (27) ou après l'activation du dispositif de blocage de fonctionnement (24).

5. Dispositif permettant de coupler et/ou de découpler un dispositif d'influence de rotor pouvant être couplé et découplé à complémentarité de formes au niveau d'un rotor (12), d'une partie d'une chaîne cinématique ou d'une transmission d'une éolienne (10), comprenant un dispositif de couplage (20) relié au dispositif d'influence de rotor, qui peut être commuté de manière réversible entre une position de découplage (23a) et une position de couplage (23b) du dispositif d'influence de rotor, et un dispositif de commande (30), au moyen duquel au moins un paramètre de fonctionnement de l'éolienne (10) peut être surveillé, avec
- un dispositif de blocage de fonctionnement (24), au moyen duquel le dispositif de couplage (20) peut être bloqué dans la position de découplage (23a), dans lequel au moyen du dispositif de commande (30) le dispositif de blocage de fonctionnement (24) peut être désactivé, dans lequel le dispositif de commande (30) est réalisé et conçu afin de désactiver le dispositif de blocage de fonctionnement (24) en fonction d'au moins un paramètre de fonctionnement surveillé, dans lequel un capteur de position de couplage (28) est compris, lequel donne un signal lorsque le dispositif de couplage (20) atteint et/ou occupe la position de couplage (23b), dans lequel le dispositif de commande (30) est réalisé et conçu afin d'activer un dispositif de blocage de couplage (27) en fonction du signal du capteur de position de couplage (28), et/ou
- un dispositif de blocage de couplage (27), au moyen duquel le dispositif de couplage (20) peut être bloqué dans la position de couplage (23b), dans lequel le dispositif de blocage de couplage (27) peut être désactivé au moyen du dispositif de commande (30),
dans lequel le dispositif de commande (30) est réalisé et conçu afin de désactiver le dispositif de blocage de couplage (27) en fonction d'au moins un paramètre de fonctionnement surveillé, dans lequel un capteur de position de fonctionnement (25) est compris, lequel donne un signal lorsque le dispositif de couplage atteint et/ou occupe la position de découplage (23a), dans lequel le dispositif de commande est réalisé et conçu afin d'activer un dispositif de blocage de fonctionnement (24) en fonction du signal du capteur de position de fonctionnement (25).

6. Dispositif selon la revendication 5, **caractérisé en ce que** le dispositif de blocage de fonctionnement (24) comporte le capteur de position de fonctionnement (25) ou est le capteur de position de fonctionnement (25) et/ou que le dispositif de blocage de couplage (27) comporte le capteur de position de couplage (28) ou est le capteur de position de couplage (28), en particulier est ou sont réalisés comme commutateur de sécurité.

7. Dispositif selon l'une quelconque des revendications 5 à 6, **caractérisé en ce que** le dispositif de blocage de fonctionnement (24) et/ou le dispositif de blocage de couplage (27) est ou sont équipé(s) d'une activation automatique, en particulier d'un mécanisme d'encliquetage ou d'un aimant ou d'un électroaimant.

8. Dispositif selon l'une quelconque des revendications 5 à 7, **caractérisé en ce qu'**un dispositif de ralentissement de rotor (34), en particulier un frein de rotor, est compris, lequel peut être commuté au moyen du dispositif de commande (30).

9. Dispositif selon l'une quelconque des revendications 5 à 8, **caractérisé en ce que** le dispositif d'influence de rotor est réalisé comme entraînement auxiliaire de transmission ou comme dispositif d'arrêt de rotor à complémentarité de formes, en particulier des boulons.

10. Dispositif selon l'une quelconque des revendications 5 à 9, **caractérisé en ce que** le dispositif de blocage de fonctionnement (24) est aussi réalisé comme dispositif de blocage de couplage (27).

11. Eolienne (10) avec une tour (11) et un rotor (12) agencé sur la tour (11) avec au moins une pale de rotor (14), comprenant un dispositif selon l'une quelconque des revendications 5 à 10 permettant de coupler et/ou de découpler un dispositif d'influence de rotor pouvant être couplé et découplé à complémentarité de formes au niveau d'un rotor (12), d'une partie d'une chaîne cinématique ou d'une transmission de l'éolienne (10).
